# FASCICULE DE BREVET EUROPEEN

(11) **EP 4 103 460 B1**
(45) Date de publication et mention de la délivrance du brevet: **17.04.2024**
(21) Numéro de dépôt: 21708283.3
(22) Date de dépôt: 12.02.2021
(51) Int. Cl.: B62H 3/00, B62H 3/08, B62K 3/00

(54) **POSTE DE STOCKAGE POUR TROTTINETTE, UNITÉS LE COMPORTANT ET ENSEMBLE LES COMPORTANT**
LAGERSTATION FÜR ROLLER, EINHEITEN DAMIT UND ANORDNUNG DAMIT
STORAGE STATION FOR SCOOTER, UNITS COMPRISING SAME AND ASSEMBLY COMPRISING THEM

(30) Priorité: 13.02.2020 FR 2001421
(43) Date de publication de la demande: 21.12.2022
(73) Titulaire: LABADIS SAS, 53000 Laval (FR)
(72) Inventeur: LABADIE, Jean, 53970 NUILLÉ SUR VICOIN (FR)
(74) Mandataire: Santarelli
(86) Numéro de dépôt international: PCT/FR2021/050255
(87) Numéro de publication internationale: WO 2021/160972

(56) Documents cités:
- EP-A1- 3 473 532
- WO-A1-2017/217929
- CN-A- 110 466 368
- DE-U1-202009 000 780

## Description

### Domaine technique de l'invention

L'invention a trait au stockage des trottinettes, en particulier au rangement et à l'entreposage des trottinettes, notamment électriques, dans des espaces de stockage, à savoir un entrepôt ou un point de vente par exemple.

### Etat de la technique

On connait des trottinettes comportant un guidon, une colonne de direction, une roue avant, un tube incliné, une plateforme et une roue arrière. La plateforme s'étend au-dessus du sol, la roue arrière étant située à une première extrémité de la plateforme, le tube incliné étant situé à une seconde extrémité de la plateforme et s'étendant depuis la plateforme jusqu'à un palier recevant la colonne de direction. La roue avant est située à une première extrémité de la colonne de direction se situant au voisinage de la plateforme et le guidon est situé à l'extrémité opposée à la première extrémité de la colonne de direction. La trottinette admet une configuration nominale dans laquelle la colonne de direction s'étend transversalement à la plateforme, et admet une configuration pliée dans laquelle la colonne de direction s'étend essentiellement le long de la plateforme.

Les documents EP 3 473 532 A1, WO 2017/217929 A1, CN 110 466 368 et DE 20 2009 000780 U1 divulguent des postes de stockage pour stocker au moins une trotinette.

### Exposé de l'invention

L'invention vise à permettre de stocker de façon simple et commode une trottinette pliable en configuration pliée.

L'invention a ainsi pour objet, un poste de stockage d'une trottinette prédéterminée, caractérisé en ce qu'il comporte :
- un support supérieur pour une première roue de ladite trottinette, comportant un creux en forme de gouttière s'étendant suivant une direction haut-bas et orienté suivant un plan vertical contenant ladite direction haut-bas et une direction avant-arrière transversale à la direction haut-bas, ledit creux étant ouvert vers l'avant et délimité par des parois configurées pour recevoir ladite première roue et pour la guider suivant ladite direction haut-bas ;
- un support inférieur pour la seconde roue de ladite trottinette, disposé en-dessous et en avant du support supérieur, comportant un creux en forme de gouttière s'étendant suivant une direction inclinée vers le bas et vers l'arrière et orienté suivant ledit plan vertical, ledit creux étant ouvert vers le haut et délimité par des parois configurées pour recevoir ladite seconde roue et pour la guider suivant ladite direction inclinée ; et
- une butée disposée en-dessous du support supérieur et en arrière du support inférieur et configurée pour maintenir ladite trottinette dans une position de stockage où ladite trottinette est en contact avec ladite butée alors que la première roue est dans le creux du support supérieur et la seconde roue dans le creux du support inférieur.

Du fait qu'une trottinette en configuration pliée s'étend pour l'essentiel entre la première roue et la seconde roue, quand la trottinette est en configuration pliée et qu'elle a sa première roue au-dessus et en arrière de sa seconde roue, son centre de gravité se trouve en-dessous et en avant de la première roue ainsi qu'au-dessus et en arrière de la seconde roue.

Or, quand une trottinette en configuration pliée est déposée dans le poste de stockage en engageant la première roue dans le support supérieur et la seconde roue dans le support inférieur, vu les emplacements de ces supports l'un par rapport à l'autre, la trottinette en configuration pliée a sa première roue au-dessus et en arrière de la seconde roue.

Par conséquent, vu l'emplacement qu'a alors le centre de gravité de la trottinette en configuration pliée, la première roue va être guidée vers le bas par les parois délimitant le creux du support supérieur tandis que la seconde roue va être guidée vers le bas et vers l'arrière par les parois délimitant le creux du support inférieur. La descente de la trottinette s'interrompt lorsque la trottinette vient en contact avec la butée car la butée est configurée pour faire cesser le mouvement de descente de la trottinette dont la première roue a été engagée dans le support supérieur et la seconde roue dans le support inférieur.

La position de stockage est ainsi une position stable, vers laquelle la trottinette en configuration pliée va aller spontanément après avoir été déposée dans le poste de stockage en engageant la première roue dans le support supérieur et la seconde roue dans le support inférieur.

La mise en place de la trottinette dans le poste de stockage est ainsi particulièrement simple et commode.

Des caractéristiques avantageuses sont présentées ci-dessous.

Ledit poste de stockage comporte une platine s'étendant suivant la direction avant-arrière et suivant une direction gauche-droite transversale à la direction avant-arrière et à la direction haut-bas, le support supérieur faisant partie d'un mât et le support inférieur faisant partie d'une rampe, le mât s'étendant entre une extrémité proximale fixée à la platine et une extrémité distale au-dessus de ladite platine et la rampe comportant une embase fixée à ladite platine.

Le mât comporte une plaque disposée à l'avant dudit mât et configurée pour que dans sa position de stockage la trottinette soit en contact avec ladite plaque, qui forme ladite butée.

Ledit poste de stockage comporte une cale configurée pour que dans sa position de stockage ladite trottinette soit en contact par sa seconde roue avec ladite cale, qui forme ladite butée.

Ledit poste de stockage comporte un élément de maintien configuré pour solliciter la trottinette vers le support supérieur de sorte à maintenir ladite trottinette contre ledit support supérieur.

Le support supérieur fait partie d'un mât et l'élément de maintien comporte une tige articulée au haut du mât, ladite tige étant mobile suivant un trajet prédéterminé se rapprochant ou s'éloignant dudit support supérieur, la tige étant configurée pour prendre appui contre la trottinette en position de stockage.

L'élément de maintien comporte une sangle configurée pour s'étendre autour de la trottinette en configuration de stockage et la maintenir contre le support supérieur.

La rampe s'étend suivant une direction inclinée par rapport à la direction avant-arrière dont l'angle d'inclinaison est compris entre 10° et 60°, préférentiellement entre 15° et 52°, et plus préférentiellement entre 20° et 25°.

L'invention vise également une unité de stockage comportant une pluralité de postes de stockage tels que précédemment décrits ainsi qu'une platine sur laquelle sont disposés côte-à-côte les postes de stockage.

L'invention vise également une unité de transport comportant une unité de stockage telle que décrite précédemment, des roues, un timon et un crochet, la platine présentant une première face principale, une seconde face principale et au moins une face latérale s'étendant entre un bord de la première face principale et un bord de la seconde face principale, le support supérieur et le support inférieur étant disposés sur la seconde face principale de la platine, les roues étant fixées à ladite platine du côté de la première face principale, et le timon étant disposé d'un premier coté de ladite platine et le crochet d'un second côté de ladite platine opposé au premier côté, pour être attelé à une unité de transport semblable.

L'invention vise également une unité de rangement comportant une unité de stockage telle que précédemment décrite comportant une première cloison latérale, une deuxième cloison latérale, une troisième cloison latérale, une quatrième cloison latérale, une cloison de fond et une porte, la première cloison latérale et la deuxième cloison latérale s'étendant en regard l'une de l'autre et étant reliées par la troisième cloison latérale et par la quatrième cloison latérale, la cloison de fond reliant la première cloison latérale, la deuxième cloison latérale, la troisième cloison latérale et la quatrième cloison latérale, la porte étant reliée à l'une des cloisons latérales et étant mobile suivant un trajet prédéterminé de sorte que l'unité de rangement adopte une position ouverte dans laquelle ladite porte s'étend le long de l'une des cloisons latérales ou une position fermée dans laquelle ladite porte s'étend en regard de la cloison de fond, chacun desdits postes de stockage étant disposé dans l'armoire, sur la troisième cloison latérale et entre la première cloison latérale et la deuxième cloison latérale.

L'invention vise également un ensemble comportant un poste de stockage tel que précédemment décrit ou une unité telle que précédemment décrite et une trottinette comportant un guidon, une colonne de direction, une roue arrière, un tube incliné, une plateforme et une roue avant, la roue arrière étant située à une première extrémité de la plateforme, le tube incliné étant situé à une seconde extrémité de la plateforme et s'étendant depuis la plateforme jusqu'à un palier recevant la colonne de direction, la roue avant étant située à une extrémité de la colonne de direction, au voisinage de la seconde extrémité de la plateforme, ladite trottinette admettant une configuration pliée dans laquelle la colonne de direction s'étend le long de la plateforme, ladite trottinette étant disposée sur le poste de stockage avec une première desdites roue arrière et roue avant engagée dans le creux du support supérieur, et l'autre desdites roue arrière et roue avant engagée dans le creux du support inférieur, la trottinette étant en contact avec la butée.

### Brève description des figures

On va maintenant poursuivre l'exposé de l'invention par la description détaillée d'exemples de réalisation, donnée ci-après à titre illustratif et non limitatif, en référence aux dessins annexés. Sur ceux-ci :
[Fig 1] la figure 1 est une vue en perspective d'un chariot avec trois postes de stockage conformes à l'invention ;
[Fig 2] la figure 2 est un agrandissement en élévation du bas du chariot rendant mieux visibles le bas de chaque mât et chaque rampe des postes de stockage de la figure 1 ;
[Fig 3] la figure 3 est une vue en perspective du chariot de la figure 1, mais avec une trottinette dans une position de stockage maintenue dans l'un des postes de stockage ;
[Fig 4] la figure 4 est une vue de droite du chariot, rendant mieux visible la première roue de la trottinette disposée dans le support supérieur, la seconde roue disposée dans le support inférieur et la trottinette prenant appui sur la butée située en partie basse du mât ;
[Fig 5] la figure 5 est une vue semblable à la figure 1 mais montrant une variante des postes de stockage ;
[Fig 6] la figure 6 est une vue semblable à la figure 5, mais avec une trottinette dans une position de stockage maintenue dans un des postes de stockage ;
[Fig 7] la figure 7 est une vue d'une unité de stockage semblable à celle illustrée sur la figure 5 mais sans roue ni timon ni crochet tandis qu'elle est munie de cloisons pour former une unité de rangement, une trottinette en une position de stockage étant disposée dans un poste de stockage ;
[Fig 8] la figure 8 est une vue en perspective d'un chariot comportant un seul poste de stockage, semblable à ceux de la figure 5, orienté différemment, et avec une trottinette dont la configuration pliée est obtenue par le pliage de sa colonne de direction ; et
[Fig 9] la figure 9 est un agrandissement du bas de la figure 8 mais sous un autre angle de vue, rendant mieux visible la seconde roue disposée dans la rampe et prenant appui contre la butée, formée ici par une cale.

### Description détaillée

Les postes de stockage 1 pour trottinettes illustrés sur les dessins comportent chacun un mât 17 et une rampe 18.

Le mât 17 s'étend le long d'une direction haut-bas 5 et comporte un creux 20 en forme de gouttière s'étendant suivant la direction haut-bas 5 et orienté suivant un plan vertical contenant la direction haut-bas 5 et une direction avant-arrière 6 transversale à la direction haut-bas 5.

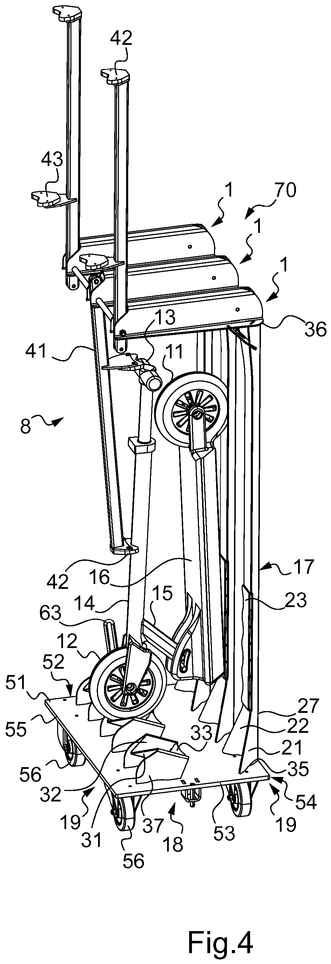

Le mât 17 s'étend entre une extrémité proximale 35 située vers le bas et une extrémité distale 36 située vers le haut. Le mât 17 est à section en V (figure 4) et comporte une paroi de fond 27, une première paroi latérale 21 et une seconde paroi latérale 22. Chaque paroi 21, 22 longe l'une des extrémités de la paroi de fond 27.

L'ouverture du creux 20 du mât 17 se trouve vers l'avant, entre les parois latérales 21, 22. Ainsi, le creux 20 du mât 17 présente une partie à largeur diminuant progressivement, située entre les parois latérales 21, 22 et une partie de fond délimitée par la paroi 27.

Ici, les parois latérales 21, 22 ont une largeur qui est plus grande au niveau de l'extrémité proximale 35 du mât 17 qu'au niveau du reste du mât, afin de favoriser la tenue aux efforts.

Le mât 17 est ici en matière métallique, en particulier en acier.

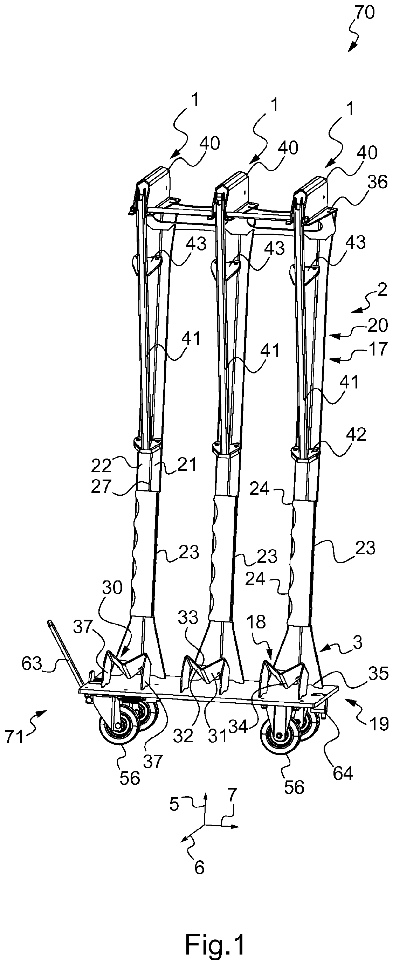

Comme on le voit bien sur les figures 1 à 4, le mât 17 comporte une plaque 23 s'étendant d'un bord libre de la première paroi latérale 21 vers un bord libre de la seconde paroi latérale 22.

La plaque 23 est une tôle pliée du bord libre de la première paroi latérale 21, soudée par des points de soudures 24 au bord libre de la seconde paroi latérale 22 et est disposée à l'avant du mât 17 de sorte à obstruer l'ouverture du creux 20.

Le mât 17 est configuré pour recevoir une première roue 11 d'une trottinette 10. Plus particulièrement, l'ouverture vers l'avant du creux 20 permet l'insertion de la première roue 11 dans le creux 20 du mât 17 et les parois latérales 21, 22 sont configurées pour guider la première roue 11 suivant la direction haut-bas 5.

La rampe 18 est disposée en dessous et en avant du mât 17.

La rampe 18 s'étend suivant une direction inclinée vers le bas et vers l'arrière et comporte un creux 30 en forme de gouttière s'étendant suivant la direction inclinée et orienté suivant le plan vertical contenant la direction haut-bas 5 et la direction avant-arrière 6. Le plan médian du creux 30 de la rampe 18 et le plan médian du creux 20 du mât 17 sont les mêmes.

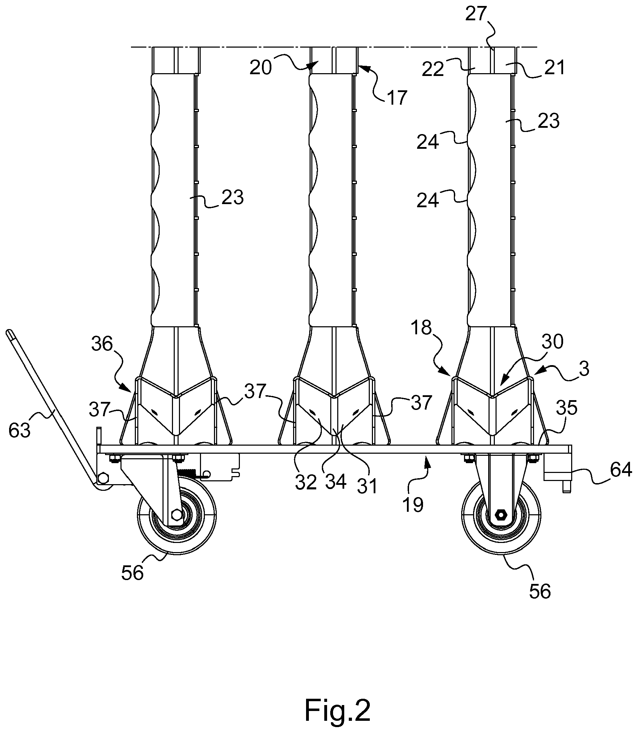

Ici, la rampe 18 est à section en V (figure 2) et comporte une paroi de fond 34, une première paroi latérale 31 et une deuxième paroi latérale 32. Chaque paroi 31, 32 longe l'une des extrémités de la paroi de fond 34.

L'ouverture du creux 30 de la rampe 18 se trouve vers le haut, entre les parois latérales 31, 32. Ainsi, le creux 30 de la rampe 18 présente une partie à largeur diminuant progressivement, située entre les parois latérales 31, 32 et une partie de fond délimitée par la paroi 34.

La rampe 18 est ici en matière métallique, en particulier en acier.

L'angle d'inclinaison de la rampe 18 par rapport à la direction avant-arrière est compris entre 10° et 60°. Préférentiellement l'angle d'inclinaison est compris entre 15° et 52°, et plus préférentiellement entre 20° et 25°.

Ici, cet angle d'inclinaison est de 22°.

La rampe 18 comporte une embase 37, ici formée par deux pattes 37 s'étendant l'une en regard de l'autre et entre lesquelles s'étendent la première paroi 31 et la seconde paroi 32.

La rampe 18 est configurée pour recevoir une seconde roue 12 de trottinette 10. Plus particulièrement, l'ouverture vers le haut du creux 30 permet l'insertion de la seconde roue 12 dans le creux 30 de la rampe 18 et les parois 31, 32 sont configurées pour guider la seconde roue 12 suivant la direction inclinée.

Le poste de stockage 1 comporte en outre une platine 19 s'étendant suivant la direction avant-arrière 6 et suivant une direction gauche-droite 7, transversale à la direction avant-arrière 6 et transversale à la direction haut-bas 5.

La platine 19 présente une première face principale 50, qui est en regard du sol et une seconde face principale 51 située du côté opposé à la première face principale 50, c'est-à-dire que la seconde face principale 51 regarde vers le haut.

La platine 19 présente des faces latérales 52, 53, 54, 55 qui s'étendent chacune entre un bord de la première face principale 50 et un bord de la seconde face principale 51.

Ici, la platine 19 a un contour rectangulaire. Une première face latérale 52 et une deuxième face latérale 53 correspondent aux petits côtés du contour rectangulaire. Une troisième face latérale 54 et une quatrième face latérale 55 correspondent aux grands côtés du contour rectangulaire.

Le mât 17 et la rampe 18 sont fixés à la platine 19 du côté de la seconde face principale 51. Plus particulièrement, l'extrémité proximale 35 du mât 17 est fixée sur la platine 19 alors que l'extrémité distale 36 est au-dessus de la platine 19 et les pattes 37 de la rampe 18 sont fixées chacune sur la platine 19 en avant du mât 17.

La platine 19 est ici en matière métallique, en particulier en acier. Le mât 17 et la rampe 18 sont soudés à la platine 19.

La trottinette 10, outre sa première roue 11 et sa seconde roue 12, comporte un guidon 13, une colonne de direction 14, un tube incliné 15 et une plateforme 16.

Pour simplifier les dessins, le palier recevant la colonne de direction 14 n'est pas représenté.

De même, seule la partie centrale du guidon 13 est dessinée (de chaque côté, il y a une rallonge amovible qui n'est pas représentée).

La roue arrière est située à une première extrémité de la plateforme 16.

Le tube incliné 15 est situé à une seconde extrémité de la plateforme 16 et s'étend depuis la plateforme 16 jusqu'à la colonne de direction 14.

La roue avant est située à une extrémité de la colonne de direction 14, au voisinage de la seconde extrémité de la plateforme 16, opposée à la première extrémité, le guidon 13 étant à la seconde extrémité, opposée à la première extrémité de la colonne de direction 14.

La trottinette 10 admet une configuration déployée et une configuration pliée. Une fois mise en configuration pliée, la trottinette 10 est bloquée dans cette position, c'est-à-dire qu'elle ne tend pas à adopter la position déployée.

Dans cette configuration pliée, la colonne de direction 14 et donc la roue avant située à son extrémité sont immobilisées angulairement.

La colonne de direction 14 s'étend alors le long de la plateforme 16.

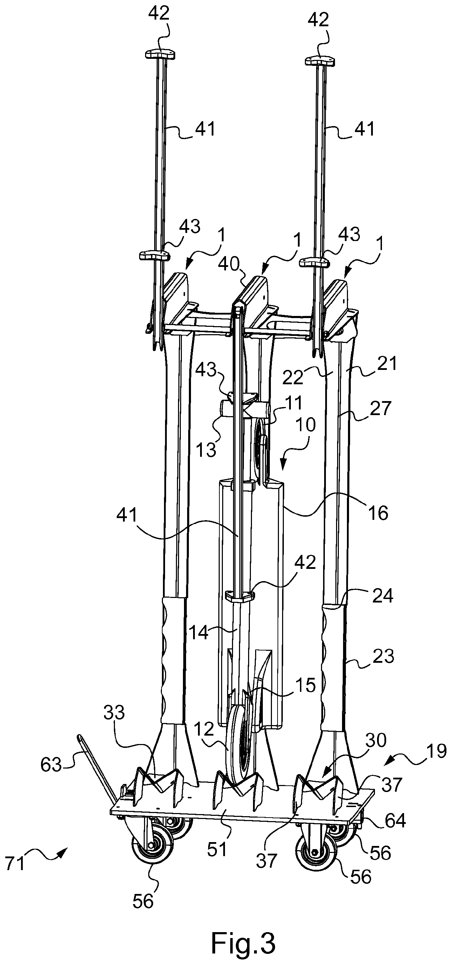

Le poste de stockage 1 est configuré pour accueillir une trottinette 10 en configuration pliée, comme on le voit bien sur les figures 3 et 4.

En configuration pliée, la trottinette 10 a la première roue 11 dans le prolongement de la plateforme 16 et la seconde roue 12 dans le prolongement de la colonne de direction 14, la plateforme 16 et la colonne de direction 14 étant en regard l'une de l'autre.

La trottinette 10 (figures 3 et 4) est disposée sur le poste de stockage 1 avec sa première roue 11 correspondant ici à sa roue arrière disposée dans le creux 20 du mât 17 et sa seconde roue 12 correspondant ici à sa roue avant disposée dans le creux 30 de la rampe 18. La roue arrière est au-dessus et en arrière de la roue avant, la plateforme 16 s'étendant entre les deux roues et la colonne de direction 14 s'étendant essentiellement entre les deux roues, dans la mesure où la colonne de direction 14 peut s'étendre au-delà de la roue arrière en position pliée.

Mise en place sur le poste 1, la trottinette 10 a un mouvement de descente de par son centre de gravité qui est situé entre le mât 17 et la rampe 18, la roue arrière roulant vers le bas dans le creux 20 du mât 17 et la roue avant roulant vers le bas et vers l'arrière dans le creux 30 de la rampe 18. La trottinette 10 a donc un mouvement général de descente vers le bas et vers l'arrière.

Comme on le voit sur la figure 4, dans son mouvement de descente le dessous de la plateforme 16 de la trottinette 10 entre en butée contre la plaque 23 du mât 17.

Ici, la plaque 23 fait cesser le mouvement de descente de la trottinette 10, lui faisant adopter une position de stockage qui est une position stable.

Les figures 1 à 4 représentent une unité de transport qui est ici un chariot 71 comportant une unité de stockage 70.

L'unité de stockage 70 comporte une platine 19 et une pluralité de postes de stockage 1 tels que décrits ci-dessus.

Les postes de stockage 1 sont disposés sur la platine 19 côte-à-côte.

Ici l'unité de stockage 70 comporte trois postes de stockage 1.

Le chariot 71 comporte en outre des roues 56, un timon 63 et un crochet 64.

Les roues 56 sont fixées à la platine 19 du côté de la première face principale 50.

La platine 19 comporte sur un premier côté un timon 63 qui adopte au repos une position relevée où il est partiellement en regard de la face latérale 52 de la platine 19 et sur le côté opposé au premier côté un crochet 64.

Un chariot 71 peut être attelé à un chariot 71 semblable.

Le timon 63 présente une fente configurée pour recevoir un doigt du crochet 64.

Ainsi, lorsqu'un crochet tel que le crochet 64 est engagé dans la fente du timon 63, le timon 63 et le crochet 64 peuvent coulisser l'un par rapport à l'autre. L'attelage ainsi formé admet une position rétractée dans laquelle les deux platines attelées l'une à l'autre sont rapprochées et une position déployée dans laquelle les deux platines sont éloignées.

Pour permettre au chariot 71 d'être aisément remorqué en tirant le timon, les roues 56 situées du même côté que le timon 63 sont librement orientables alors que les deux autres roues 56 sont à orientation fixe suivant la direction de déplacement prévue pour la platine et les postes de stockage.

Dans une variante, l'unité de transport est par exemple une remorque sur laquelle est disposée une unité de stockage telle que 70.

Chaque poste de stockage 1 comporte au surplus un élément de maintien 8 permettant le maintien de la trottinette sur le poste de stockage de l'unité de transport lors du déplacement de cette unité. L'élément de maintien 8 est configuré pour solliciter la trottinette 10 vers le mât 17 de sorte à maintenir la trottinette contre le mât 17, la trottinette 10 étant bloquée entre la rampe 18 et le mât 17 en position de stockage.

Comme représenté sur les figures 1 et 3 l'élément de maintien 8 comporte une tige articulée 41.

Ici, un bras saille de l'extrémité distale du mât 17, vers l'avant et forme potence avec le mât 17. La tige 41 est articulée à l'extrémité libre du bras. Un élément élastique tel qu'un vérin ou un ressort par exemple, est articulé vis-à-vis du mât 17 et vis-à-vis de la tige 41. Le bras et l'élément élastique sont disposés dans un capot 40 et ne sont donc pas visibles sur les dessins.

La tige 41 est mobile suivant un trajet prédéterminé entre une position la plus proche du mât 17, montrée sur la figure 1 et sur le poste de stockage 1 sur lequel est disposé la trottinette 10 de la figure 3, et une position la plus éloignée du mât 17, montrée sur les postes de stockage 1 de la figure 3 ne comportant pas de trottinette.

Du fait que la tige 41 est articulée vis-à-vis du bras formant potence avec le mât 17, ce trajet prédéterminé est ici en arc de cercle.

La tige 41 comporte un premier tampon 42, configuré pour prendre appui sur la trottinette 10 en position de stockage.

Le premier tampon 42 a une forme générale de croissant et est disposé à l'extrémité libre de la tige 41. Il comporte un embout en matériau souple comme par exemple du caoutchouc dont le creux du croissant est configuré pour prendre appui contre la colonne de direction 14 de la trottinette, lui permettant alors d'être maintenue contre le mât 17.

Ici, la tige 41 comporte également un second tampon 43 disposé entre le premier tampon 42 et l'articulation de la tige 41. Ce second tampon 43 est configuré pour prendre appui contre la colonne de direction 41 lorsque celle-ci s'étend au-dessus de la roue arrière. Le second tampon 43 est donc adapté pour recevoir une trottinette de plus grande taille.

Du fait que la tige 41, notamment par son tampon 42, est maintenue en appui sur la colonne de direction 14 de la trottinette 10, la trottinette 10 reste en position de stockage malgré les sollicitations auxquelles elle est soumise lors du transport.

Il en va de même avec le tampon 43 dans le cas d'une trottinette de plus grande taille.

Du fait que le seul mouvement que peut effectuer la tige 41 est un mouvement de pivotement par rapport au bras autour de la direction gauche-droite 7, la tige 41 empêche, en tout cas limite fortement, les mouvements de la colonne de direction 14 suivant cette direction gauche-droite 7.

Etant donné par ailleurs que les roues de la trottinette 10 sont enfoncées dans le creux 20 du mât 17 et dans le creux 30 de la rampe 18, et que ces roues sont bien maintenues par le mât 17 et par la rampe 18, la trottinette ne peut pas osciller, ou en tout cas que très modérément.

Par conséquent, le transport de la trottinette 10 peut s'opérer dans d'excellentes conditions.

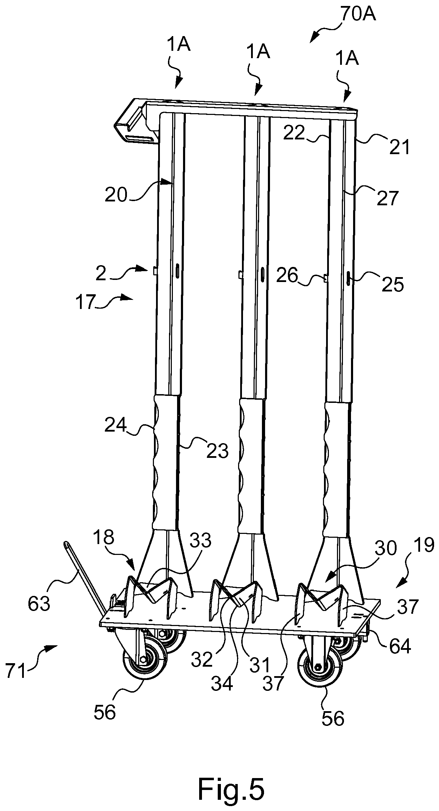

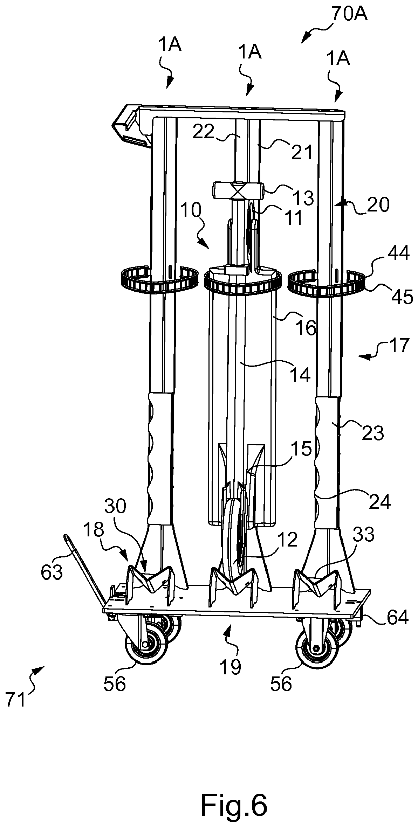

Les figures 5 et 6 illustrent une variante des postes de stockage des figures 1 à 4.

De sorte à simplifier les figures, les éléments communs entre les postes de stockage 1A de cette variante et les postes de stockage 1 des figures 1 à 4 porteront les mêmes références numériques.

De plus, seules les caractéristiques différenciantes du poste de stockage 1A vis-à-vis du poste de stockage 1 seront décrites.

Les postes de stockage 1A ont chacun une ouverture 25 ménagée dans la première paroi latérale 21 du mât 17 et la seconde paroi latérale 22 comporte un doigt de fixation 26.

L'ouverture 25 est à mi-hauteur de la paroi 21 entre l'extrémité proximale 35 du mât 17 et son extrémité distale 36.

Le doigt 26, s'étendant à la mi-hauteur de la paroi 22 entre l'extrémité proximale 35 du mât 17 et son extrémité distale 36, comporte une première partie et une seconde partie.

La première partie s'étend vers la gauche de la paroi 22 et la seconde partie s'étend de l'extrémité libre de la première partie vers l'arrière.

Ici, l'élément de maintien 8 comporte une sangle 44 à crans 45.

La sangle 44 est configurée pour s'insérer dans l'ouverture 25 et le doigt 26 est configuré pour s'insérer dans un cran 45 de la sangle 44.

Comme on le voit bien sur la figure 6, la sangle 44 est disposée autour de la trottinette 10 et est accrochée au travers de l'ouverture 25 et du doigt 26 de sorte à maintenir la sangle 44 serrée autour de la trottinette 10.

Du fait que la sangle 44 maintient par serrage la trottinette 10 contre le mât 17 la trottinette 10 ne peut glisser vis-à-vis de la sangle 44.

Etant donné par ailleurs que les roues de la trottinette sont enfoncées dans le creux 20 du mât 17 et dans le creux 30 de la rampe 18, et que ces roues sont bien maintenues par le mât 17 et par la rampe 18, la trottinette 10 ne peut pas osciller, ou en tout cas que très modérément.

Par conséquent, le transport de la trottinette peut s'opérer dans d'excellentes conditions, et notamment sans chocs de la trottinette contre le mât ou une autre trottinette.

Les figures 5 et 6 représentent un chariot 71 comportant une unité de stockage 70A.

L'unité de stockage 70A comporte une platine 19 et une pluralité de postes de stockage 1A tels que décrits ci-dessus.

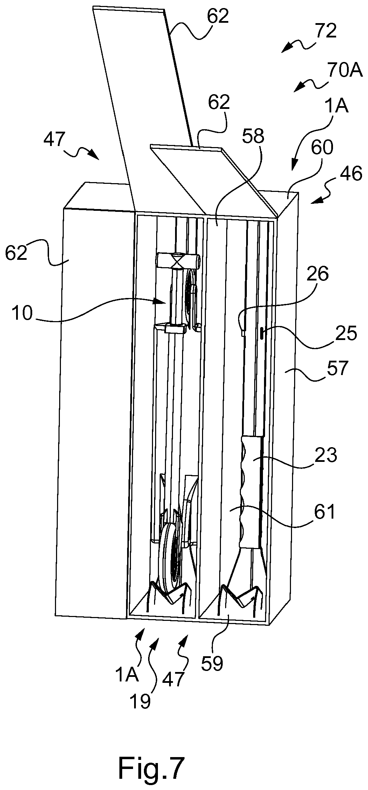

La figure 7 illustre une unité de stockage 70A munie de cloisons 57 à 62 pour former une armoire de rangement 46.

L'armoire de rangement 46 comporte des compartiments 47, ici trois compartiments 47, délimités chacun par des cloisons latérales 57 à 60, une cloison de fond 61 et une porte 62.

La première cloison latérale 57 et la deuxième cloison latérale 58 s'étendent en regard l'une de l'autre et sont reliées par la troisième cloison latérale 59 et la quatrième cloison latérale 60, la première cloison 57 d'un compartiment 47 pouvant former la deuxième cloison 58 d'un autre compartiment 47 disposé à côté. La cloison de fond 61 relie la première cloison latérale 57, la deuxième cloison latérale 58, la troisième cloison latérale 59 et la quatrième cloison latérale 60.

La troisième cloison 59 est disposée sur la seconde face principale 51 de la platine 19. Ici, le mât 17 et la rampe 18 sont disposés sur la troisième cloison 59 et non sur la seconde face principale 51 de la platine 19.

Ici, la porte 62 est reliée à la quatrième cloison latérale 59 par une articulation lui permettant d'être mobile suivant un trajet prédéterminé de sorte que le compartiment 47 puisse adopter une position ouverte ou une position fermée.

Du fait que la porte 62 est articulée vis-à-vis de la quatrième cloison 60, le trajet est ici en arc de cercle.

En position fermée, la porte 62 est en regard de la cloison de fond 61, alors qu'en position ouverte, la porte 62 s'étend au moins le long de la quatrième cloison latérale 60, permettant l'accès à l'intérieur du compartiment 47.

Plus généralement, l'unité de stockage 70A est munie de cloisons pour former une unité de rangement 72. L'unité de rangement 72 est ici l'armoire 46.

Dans une variante, l'unité de rangement 72 , par exemple, ne comporte qu'un seul compartiment dans lequel la pluralité de postes de stockage est disposée plutôt qu'une pluralité de compartiments.

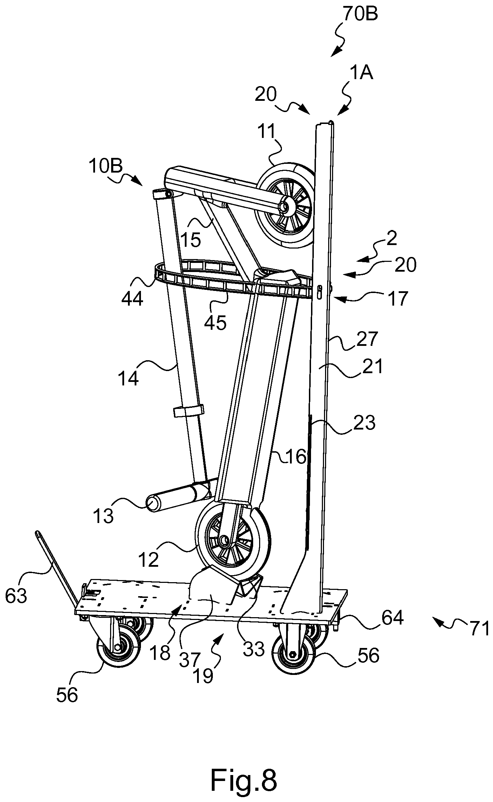

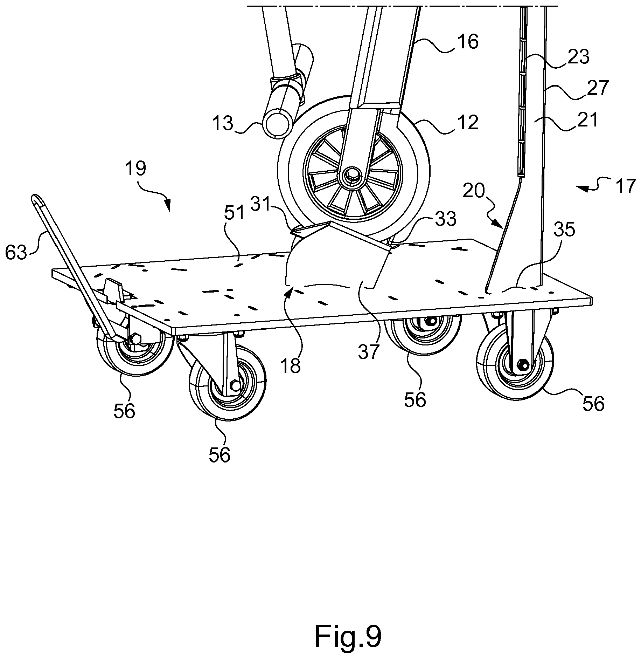

Les figures 8 et 9 représentent un chariot 71 comportant une unité de stockage 70B.

L'unité de stockage 70B comporte une platine 19 et un seul poste de stockage 1A tel que décrit ci-dessus mais orienté différemment.

Ici, la rampe 18 comporte une cale 33 disposée vers l'arrière et vers le bas, au droit de l'ouverture du creux 30.

Comme illustré sur les figures 8 et 9, une trottinette 10B est disposée sur le poste de stockage 1A.

En configuration pliée, la trottinette 10B a la première roue 11 et la seconde roue 12 dans le prolongement de la plateforme 16, la colonne de direction 14 étant articulée autour d'une liaison pivot située entre le tube incliné 15 et le guidon 13.

La trottinette 10B, disposée sur le poste de stockage 1A, a sa première roue 11 correspondant ici à sa roue avant disposée dans le creux 20 du mât 17 et sa seconde roue 12 correspondant ici à sa roue arrière disposée dans le creux 30 de la rampe 18. La roue avant est au-dessus et en arrière de la roue arrière. La plateforme 16 et la colonne de direction 14 s'étendent essentiellement entre les deux roues, dans la mesure où la colonne de direction 14 peut s'étendre au-delà de la roue arrière en position pliée.

Le poste de stockage est ici disposé selon une diagonale de la platine 19, de sorte que la trottinette 10B ne dépasse pas de la platine 19. Cet agencement est dû à l'encombrement plus important de la trottinette 10B par rapport à la trottinette 10.

Mise en place sur le poste 1A, la trottinette 10B a le même mouvement de descente que la trottinette 10 dans le poste de stockage 1 décrit précédemment et illustré sur les figures 3 et 4, de par son centre de gravité qui est aussi situé entre le mât 17 et la rampe 18.

Comme on le voit sur les figures 8 et 9, dans son mouvement de descente la seconde roue 12 de la trottinette 10B entre en butée contre la cale 33.

Ici, la cale 33 fait cesser le mouvement de descente de la trottinette 10B le long du mât 17 et de la rampe 18, lui faisant adopter la position de stockage.

Il est à noter que les postes de stockage représentés sur les figures 1 à 7 comportent aussi une cale 33, de sorte qu'ils puissent accueillir une trottinette différente de la trottinette 10, notamment une trottinette dont la plateforme 16 est moins épaisse.

D'une façon générale, lorsqu'une trottinette telle que la trottinette 10 ou la trottinette 10B est maintenue sur le poste de stockage 1 ou 1A, le plan médian du creux 20 du mât 17, du creux 30 de la rampe 18 et le plan médian de la trottinette sont alignés.

Ici, un morceau du mât 17 forme un support supérieur 2 configuré pour recevoir la première roue 11.

Dans une variante, le support supérieur 2 fait partie de la cloison de fond 61 de l'armoire 46, dans laquelle est ménagé un creux en forme de gouttière pour recevoir la première roue.

De même, ici un morceau de la rampe 18 forme un support inférieur 3 configuré pour recevoir la seconde roue 12.

Dans une variante, le support inférieur 3 fait partie de la platine dans laquelle est ménagé un creux en forme de gouttière s'étendant suivant une direction inclinée pour recevoir la seconde roue.

Des variantes non illustrées sont présentées ci-après.

La section du mât et la section de la rampe sont différentes, par exemple en U.

La platine est différente d'un plaque métallique massive, par exemple une structure ajourée en métal perforé ou en treillis de fils métalliques associée le cas échéant à un lest économique, par exemple un bloc de ciment.

La platine ne comporte pas de roue pour ne permettre que le stockage et non le transport des trottinettes.

La sangle maintenant la trottinette contre le mât comporte une boucle de fermeture permettant d'entourer le mât et la trottinette et d'assurer le serrage de l'un contre l'autre.

L'unité de stockage comporte davantage ou moins que trois postes de stockage, par exemple deux ou quatre.

Une trottinette 10B est maintenue au poste de stockage par l'élément de maintien comportant la tige articulée.

La butée contre laquelle vient la trottinette est différente de la plaque 23 ou de la cale 33, par exemple elle est formée par le bord libre de la première paroi 21 et par le bord libre de la seconde paroi 22 du mât, dans ce cas, le dessous de la plateforme de la trottinette 10 entre en butée contre chacun des bords.

De nombreuses autres variantes sont possibles en fonction des circonstances ; et on rappelle à cet égard que l'invention ne se limite pas aux exemples décrits et représentés, mais se réfère aux revendications.

## Revendications

1. Poste de stockage d'une trottinette prédéterminée, **caractérisé en ce qu'**il comporte :
- un support supérieur (2) pour une première roue (11) de ladite trottinette (10 ;10B), comportant un creux (20) en forme de gouttière s'étendant suivant une direction haut-bas (5) et orienté suivant un plan vertical contenant ladite direction haut-bas (5) et une direction avant-arrière (6) transversale à la direction haut-bas (5), ledit creux (20) étant ouvert vers l'avant et délimité par des parois (21, 22) configurées pour recevoir ladite première roue (11) et pour la guider suivant ladite direction haut-bas (5) ;
- un support inférieur (3) pour la seconde roue (12) de ladite trottinette (10 ;10B), disposé en-dessous et en avant du support supérieur (2), comportant un creux (30) en forme de gouttière s'étendant suivant une direction inclinée vers le bas et vers l'arrière et orienté suivant ledit plan vertical, ledit creux (30) étant ouvert vers le haut et délimité par des parois (31, 32) configurées pour recevoir ladite seconde roue (12) et pour la guider suivant ladite direction inclinée ; et
- une butée (23 ;33) disposée en-dessous du support supérieur (2) et en arrière du support inférieur (3) et configurée pour maintenir ladite trottinette (10 ;10B) dans une position de stockage où ladite trottinette (10 ;10B) est en contact avec ladite butée (23 ;33) alors que la première roue (11) est dans le creux (20) du support supérieur (2) et la seconde roue (12) dans le creux (30) du support inférieur (3).

2. Poste de stockage selon la revendication 1, **caractérisé en ce qu'**il comporte une platine (19) s'étendant suivant la direction avant-arrière (6) et suivant une direction gauche-droite (7) transversale à la direction avant-arrière (6) et à la direction haut-bas (5), le support supérieur (2) faisant partie d'un mât (17) et le support inférieur (3) faisant partie d'une rampe (18), le mât (17) s'étendant entre une extrémité proximale (35) fixée à la platine (19) et une extrémité distale (36) au-dessus de ladite platine (19) et la rampe (18) comportant une embase (37) fixée à ladite platine (19).

3. Poste de stockage selon la revendication 2, **caractérisé en ce que** le mât (17) comporte une plaque (23) disposée à l'avant dudit mât (17) et configurée pour que dans sa position de stockage la trottinette (10) soit en contact avec ladite plaque (23), qui forme ladite butée.

4. Poste de stockage selon l'une quelconque des revendications 1 ou 2, **caractérisé en ce qu'**il comporte une cale (33) configurée pour que dans sa position de stockage ladite trottinette (10B) soit en contact par sa seconde roue avec ladite cale (33), qui forme ladite butée.

5. Poste de stockage, selon l'une quelconque des revendications 1 à 4, **caractérisé en ce qu'**il comporte un élément de maintien (8) configuré pour solliciter la trottinette (10 ;10B) vers le support supérieur (2) de sorte à maintenir ladite trottinette (10 ;10B) contre ledit support supérieur (2).

6. Poste de stockage selon la revendication 5, **caractérisé en ce que** le support supérieur (2) fait partie d'un mât (17) et **en ce que** l'élément de maintien (8) comporte une tige (41) articulée au haut du mât (17), ladite tige (41) étant mobile suivant un trajet prédéterminé se rapprochant ou s'éloignant dudit support supérieur (2), la tige (41) étant configurée pour prendre appui contre la trottinette (10 ;10B) en position de stockage.

7. Poste de stockage selon la revendication 5, **caractérisé en ce que** l'élément de maintien (8) comporte une sangle (44) configurée pour s'étendre autour de la trottinette (10 ;10B) en configuration de stockage et la maintenir contre le support supérieur (2).

8. Poste de stockage selon l'une quelconque des revendications 2 à 7, **caractérisé en ce que** la rampe (18) s'étend suivant une direction inclinée par rapport à la direction avant-arrière dont l'angle d'inclinaison est compris entre 10° et 60°, préférentiellement entre 15° et 52°, et plus préférentiellement entre 20° et 25°.

9. Unité de stockage comportant une pluralité de postes de stockage (1 ;1A) selon l'une quelconque des revendications 1 à 8 ainsi qu'une platine (19) sur laquelle sont disposés côte-à-côte les postes de stockage (1 ;1A).

10. Unité de transport comportant une unité de stockage selon la revendication 9, des roues (56), un timon (63) et un crochet (64), la platine (19) présentant une première face principale (50), une seconde face principale (51) et au moins une face latérale (52) s'étendant entre un bord de la première face principale (50) et un bord de la seconde face principale (51), le support supérieur (2) et le support inférieur (3) étant disposés sur la seconde face principale (51) de la platine (19), les roues (56) étant fixées à ladite platine (19) du côté de la première face principale (50), et le timon (63) étant disposé d'un premier coté de ladite platine (19) et le crochet (64) d'un second côté de ladite platine (19) opposé au premier côté, pour être attelé à une unité de transport semblable.

11. Unité de rangement comportant une unité de stockage selon l'une quelconque des revendications 9 ou 10 comportant une première cloison latérale (57), une deuxième cloison latérale (58), une troisième cloison latérale (59), une quatrième cloison latérale (60), une cloison de fond (61) et une porte (62), la première cloison latérale (57) et la deuxième cloison latérale (58) s'étendant en regard l'une de l'autre et étant reliées par la troisième cloison latérale (59) et par la quatrième cloison latérale (60), la cloison de fond (61) reliant la première cloison latérale (57), la deuxième cloison latérale (58), la troisième cloison latérale (59) et la quatrième cloison latérale (60), la porte (62) étant reliée à l'une des cloisons latérales (57-60) et étant mobile suivant un trajet prédéterminé de sorte que l'unité de rangement (72) adopte une position ouverte dans laquelle ladite porte (62) s'étend le long de l'une des cloisons latérales (57-60) ou une position fermée dans laquelle ladite porte (62) s'étend en regard de la cloison de fond (61), chacun desdits postes de stockage (1) étant disposé dans l'armoire (46), sur la troisième cloison latérale (59) et entre la première cloison latérale (57) et la deuxième cloison latérale (58).

12. Ensemble comportant un poste de stockage (1 ;1A) selon l'une quelconque des revendications 1 à 8 ou une unité selon l'une quelconque des revendications 9 à 11 et une trottinette (10 ;10B) comportant un guidon (13), une colonne de direction (14), une roue arrière (11), un tube incliné (15), une plateforme (16) et une roue avant (12), la roue arrière (11) étant située à une première extrémité de la plateforme (16), le tube incliné (15) étant situé à une seconde extrémité de la plateforme (16) et s'étendant depuis la plateforme (16) jusqu'à un palier recevant la colonne de direction (14), la roue avant (12) étant située à une extrémité de la colonne de direction (14), au voisinage de la seconde extrémité de la plateforme (16), ladite trottinette (10 ;10B) admettant une configuration pliée dans laquelle la colonne de direction (14) s'étend le long de la plateforme (16), ladite trottinette (10 ;10B) étant disposée sur le poste de stockage (1 ;1A) avec une première desdites roue arrière (11) et roue avant (12) engagée dans le creux (20) du support supérieur (2), et l'autre desdites roue arrière (11) et roue avant (12) engagée dans le creux (30) du support inférieur (3), la trottinette (10 ;10B) étant en contact avec la butée (23 ;33).

## Patentansprüche

1. Lagerstation für einen vorbestimmten Roller, **dadurch gekennzeichnet, dass** sie Folgendes umfasst:
- eine obere Halterung (2) für ein erstes Rad (11) des Rollers (10; 10B), die einen Hohlraum (20) in Form einer Rinne umfasst, der sich in einer Richtung von oben nach unten (5) erstreckt und entlang einer vertikalen Ebene ausgerichtet ist, die die Richtung von oben nach unten (5) und eine Richtung von vorne nach hinten (6), die quer zur Richtung von oben nach unten (5) verläuft, enthält, wobei der Hohlraum (20) nach vorne hin offen ist und durch Wände (21, 22) begrenzt ist, die dazu konfiguriert sind, das erste Rad (11) aufzunehmen und es in der Richtung von oben nach unten (5) zu führen;
- eine untere Halterung (3) für das zweite Rad (12) des Rollers (10; 10B), die unterhalb und vor der oberen Halterung (2) angeordnet ist und einen Hohlraum (30) in Form einer Rinne umfasst, der sich in einer nach unten und hinten geneigten Richtung erstreckt und entlang der vertikalen Ebene ausgerichtet ist, wobei der Hohlraum (30) nach oben hin offen ist und durch Wände (31, 32) begrenzt ist, die dazu konfiguriert sind, das zweite Rad (12) aufzunehmen und es in der geneigten Richtung zu führen; und
- einen Anschlag (23; 33), der unterhalb der oberen Halterung (2) und hinter der unteren Halterung (3) angeordnet und dazu konfiguriert ist, den Roller (10; 10B) in einer Lagerposition zu halten, in der der Roller (10; 10B) in Kontakt mit dem Anschlag (23; 33) steht, während sich das erste Rad (11) im Hohlraum (20) der oberen Halterung (2) und das zweite Rad (12) im Hohlraum (30) der unteren Halterung (3) befindet.

2. Lagerstation nach Anspruch 1, **dadurch gekennzeichnet, dass** sie eine Grundplatte (19) umfasst, die sich in der Richtung von vorne nach hinten (6) und in einer Richtung von links nach rechts (7), die quer zur Richtung von vorne nach hinten (6) und zur Richtung von oben nach unten (5) verläuft, erstreckt, wobei die obere Halterung (2) Teil einer Stange (17) bildet und die untere Halterung (3) Teil einer Rampe (18) bildet, wobei die Stange (17) sich zwischen einem proximalen Ende (35), das an der Grundplatte (19) befestigt ist, und einem distalen Ende (36) über der Grundplatte (19) erstreckt und die Rampe (18) eine Basis (37) umfasst, die an der Grundplatte (19) befestigt ist.

3. Lagerstation nach Anspruch 2, **dadurch gekennzeichnet, dass** die Stange (17) eine Platte (23) umfasst, die an der Vorderseite der Stange (17) angeordnet und dazu konfiguriert ist, dass der Roller (10) in seiner Lagerposition mit der Platte (23) in Kontakt steht, die den Anschlag bildet.

4. Lagerstation nach einem der Ansprüche 1 oder 2, **dadurch gekennzeichnet, dass** sie einen Keil (33) umfasst, der dazu konfiguriert ist, dass der Roller (10B) in seiner Lagerposition über sein zweites Rad mit dem Keil (33) in Kontakt steht, der den Anschlag bildet.

5. Lagerstation nach einem der Ansprüche 1 bis 4, **dadurch gekennzeichnet, dass** sie ein Halteelement (8) umfasst, das dazu konfiguriert ist, den Roller (10; 10B) in Richtung der oberen Halterung (2) zu drücken, um den Roller (10; 10B) gegen die obere Halterung (2) zu halten.

6. Lagerstation nach Anspruch 5, **dadurch gekennzeichnet, dass** die obere Halterung (2) Teil einer Stange (17) bildet, und dass das Halteelement (8) einen an der Spitze der Stange (17) angelenkten Stab (41) umfasst, wobei der Stab (41) entlang einer vorbestimmten Bahn beweglich ist, um sich der oberen Halterung (2) zu nähern oder sich von ihr weg zu bewegen, wobei der Stab (41) dazu konfiguriert ist, sich in Lagerposition gegen den Roller (10; 10B) abzustützen.

7. Lagerstation nach Anspruch 5, **dadurch gekennzeichnet, dass** das Halteelement (8) einen Haltegurt (44) umfasst, der dazu konfiguriert ist, sich in der Lagerkonfiguration um den Roller (10; 10B) herum zu erstrecken und ihn an der oberen Halterung (2) zu halten.

8. Lagerstation nach einem der Ansprüche 2 bis 7, **dadurch gekennzeichnet, dass** die Rampe (18) sich in einer Richtung erstreckt, die in Bezug auf die Richtung von vorne nach hinten geneigt ist und deren Neigungswinkel zwischen 10° und 60°, vorzugsweise zwischen 15° und 52° und noch bevorzugter zwischen 20° und 25° beträgt.

9. Lagereinheit, die eine Vielzahl von Lagerstationen (1; 1A) nach einem der Ansprüche 1 bis 8 sowie eine Grundplatte (19) umfasst, auf der die Lagerstationen (1; 1A) nebeneinander angeordnet sind.

10. Transporteinheit, die eine Lagereinheit nach Anspruch 9, Räder (56), eine Zugdeichsel (63) und einen Haken (64) umfasst, wobei die Grundplatte (19) eine erste Hauptfläche (50), eine zweite Hauptfläche (51) und mindestens eine Seitenfläche (52), die sich zwischen einem Rand der ersten Hauptfläche (50) und einem Rand der zweiten Hauptfläche (51) erstreckt, aufweist, wobei die obere Halterung (2) und die untere Halterung (3) auf der zweiten Hauptfläche (51) der Grundplatte (19) angeordnet sind, wobei die Räder (56) auf der Seite der ersten Hauptfläche (50) an der Grundplatte (19) befestigt sind und die Zugdeichsel (63) auf einer ersten Seite der Grundplatte (19) und der Haken (64) auf einer zweiten Seite der Grundplatte (19) gegenüber der ersten Seite angeordnet ist, um an eine ähnliche Transporteinheit angekuppelt zu werden.

11. Aufbewahrungseinheit, die eine Lagereinheit nach einem der Ansprüche 9 oder 10 umfasst und eine erste Seitenwand (57), eine zweite Seitenwand (58), eine dritte Seitenwand (59), eine vierte Seitenwand (60), eine Rückwand (61) und eine Tür (62) umfasst, wobei die erste Seitenwand (57) und die zweite Seitenwand (58) sich einander gegenüberliegend erstrecken und durch die dritte Seitenwand (59) und durch die vierte Seitenwand (60) verbunden sind, wobei die Rückwand (61) die erste Seitenwand (57), die zweite Seitenwand (58), die dritte Seitenwand (59) und die vierte Seitenwand (60) verbindet, wobei die Tür (62) mit einer der Seitenwände (57-60) verbunden und entlang einer vorbestimmten Bahn beweglich ist, so dass die Aufbewahrungseinheit (72) eine offene Position, in der sich die Tür (62) entlang einer der Seitenwände (57-60) erstreckt, oder eine geschlossene Position einnimmt, in der sich die Tür (62) gegenüber der Rückwand (61) erstreckt, wobei jede der Lagerstationen (1) im Schrank (46), an der dritten Seitenwand (59) und zwischen der ersten Seitenwand (57) und der zweiten Seitenwand (58) angeordnet ist.

12. Anordnung, die eine Lagerstation (1; 1A) nach einem der Ansprüche 1 bis 8 oder eine Einheit nach einem der Ansprüche 9 bis 11 und einen Roller (10; 10B) umfasst, der einen Lenker (13), eine Lenksäule (14), ein Hinterrad (11), ein schräges Rohr (15), eine Plattform (16) und ein Vorderrad (12) umfasst, wobei sich das Hinterrad (11) an einem ersten Ende der Plattform (16) befindet, wobei sich das schräge Rohr (15) an einem zweiten Ende der Plattform (16) befindet und sich von der Plattform (16) zu einem Lager erstreckt, das die Lenksäule (14) aufnimmt, wobei sich das Vorderrad (12) an einem Ende des Lenksäule (14) in der Nähe des zweiten Endes der Plattform (16) befindet, wobei der Roller (10; 10B) eine zusammengeklappte Konfiguration zulässt, in der sich die Lenksäule (14) entlang der Plattform (16) erstreckt, wobei der Roller (10; 10B) auf der Lagerstation (1; 1A) angeordnet ist, wobei ein erstes des Hinterrads (11) und des Vorderrads (12) in den Hohlraum (20) der oberen Halterung (2) eingreift, und das andere des Hinterrads (11) und des Vorderrads (12) in den Hohlraum (30) der unteren Halterung (3) eingreift, wobei der Roller (10; 10B) in Kontakt mit dem Anschlag (23; 33) steht.

## Claims

1. Station for storing a predetermined scooter, **characterised in that** it includes:
- a top support (2) for a first wheel (11) of said scooter (10; 10B), including a hollow (20) in the form of a channel extending in a top-bottom direction (5) and oriented along a vertical plane containing said top-bottom direction (5) and a front-rear direction (6) transverse to the top-bottom direction (5), said hollow (20) being open towards the front and delimited by walls (21, 22) configured to receive said first wheel (11) and to guide it in said top-bottom direction (5);
- a bottom support (3) for the second wheel (12) of said scooter (10; 10B) disposed underneath and in front of the top support (2), having a hollow (30) in the form of a channel extending in a direction inclined downwards and towards the rear and oriented along said vertical plane, said hollow (30) being open towards the top and delimited by walls (31, 32) configured to receive said second wheel (12) and to guide it in said inclined direction; and
- a stop (23; 33) disposed underneath the top support (2) and behind the bottom support (3) and configured to hold said scooter (10; 10B) in a storage position where said scooter (10; 10B) is in contact with said stop (23; 33) whereas the first wheel (11) is in the hollow (20) of the top support (2) and the second wheel (12) in the hollow (30) of the bottom support (3).

2. Storage station according to claim 1, **characterised in that** includes a deck (19) extending in the front-rear direction (6) and in a left-right direction (7) transverse to the front-rear direction (6) and to the top-bottom direction (5), the top support (2) forming part of a mast (17) and the bottom support (3) forming part of a ramp (18), the mast (17) extending between a proximal end (35) secured to the deck (19) and a distal end (36) above said deck (19), and the ramp (18) including a base (37) secured to said plate (19) .

3. Storage station according to claim 2, **characterised in that** the mast (17) includes a plate (23) disposed in front of said mast (17) and configured so that, in its storage position, the scooter (10) is in contact with said plate (23), which forms said stop.

4. Storage station according to either one of claims 1 or 2, **characterised in that** it includes a wedge (33) configured so that, in its storage position, said scooter (10B) is in contact through its second wheel with said wedge (33), which forms said stop.

5. Storage station according to any one of claims 1 to 4, **characterised in that** it includes a holding element (8) configured to urge the scooter (10, 10B) towards the top support (2) so as to hold said scooter (10; 10B) against said top support (2).

6. Storage station according to claim 5, **characterised in that** the top support (2) forms part of a mast (17) and **in that** the holding element (8) includes a rod (41) articulated at the top of the mast (17), said rod (41) being able to move on a predetermined path moving closer to or further away from said top support (2), the rod (41) being configured to bear against the scooter (10; 10B) in the storage position.

7. Storage station according to claim 5, **characterised in that** the holding element (8) includes a strap (44) configured to extend around the scooter (10; 10B) in the storage configuration and to hold it against the top support (2) .

8. Storage station according to any one of claims 2 to 7, **characterised in that** the ramp (18) extends in a direction inclined with respect to the front-rear direction, the angle of inclination of which is between 10° and 60°, preferentially between 15° and 52°, and more preferentially between 20° and 25°.

9. Storage unit including a plurality of storage stations (1; 1A) according to any one of claims 1 to 8 as well as a deck (19) on which the storage stations (1; 1A) are disposed side by side.

10. Transport unit including a storage unit according to claim 9, wheels (56), a drawbar (63) and a hook (64), the deck (19) having a first main face (50), a second main face (51) and at least one lateral face (52) extending between an edge of the first main face (50) and an edge of the second main face (51), the top support (2) and the bottom support (3) being disposed on the second main face (51) of the deck (19), the wheels (56) being secured to said deck (19) on the same side as the first main face (50), and the drawbar (63) being disposed on a first side of said deck (19) and the hook (64) on a second side of said deck (19) opposite to the first side, to be coupled to a similar transport unit.

11. Arrangement unit including a storage unit according to any one of claims 9 or 10, including a first lateral partition (57), a second lateral partition (58), a third lateral partition (59), a fourth lateral partition (60), a back partition (61) and a door (62), the first lateral partition (57) and the second lateral partition (58) extending facing each other and being connected by the third lateral partition (59) and by the fourth lateral partition (60), the back partition (61) connecting the first lateral partition (57), the second lateral partition (58), the third lateral partition (59) and the fourth lateral partition (60), the door (62) being connected to one of the lateral partitions (57-60) and being able to move on a predetermined path so that the arrangement unit (72) adopts an open position wherein said door (62) extends along one of the lateral partitions (57-60) or a closed position wherein said door (62) extends facing the back partition (61), each of said storage units (1) being disposed in the cubicle (46), on the third lateral partition (59) and between the first lateral partition (57) and the second lateral partition (58).

12. Assembly including a storage station (1; 1A) according to any one of claims 1 to 8 or a unit according to any one of claims 9 to 11 and a scooter (10; 10B) including a handlebar (13), a steering column (14), a rear wheel (11), an inclined tube (15), a platform (16) and a front wheel (12), the rear wheel (11) been located at a first end of the platform (16), the inclined tube (15) been located at a second end of the platform (16) and extending from the platform (16) as far as a bearing receiving the steering column (14), the front wheel (12) being located at one end of the steering column (14), in the vicinity of the second end of the platform (16), said scooter (10; 10B) allowing a folded configuration wherein the steering column (14) extends along the platform (16), said scooter (10; 10B) being disposed on the storage station (1; 1A) with a first of said rear wheel (11) and front wheel (12) engaged in the hollow (20) of the top support (2), and the other of said rear wheel (11) and front wheel (12) engaged in the hollow (30) of the bottom support (3), the scooter (10; 10B) being in contact with the stop (23; 33).
